# EUROPEAN PATENT APPLICATION

(11) **EP 2 511 753 A1**
(43) Date of publication of application: **17.10.2012**
(21) Application number: 09852094.3
(22) Date of filing: 11.12.2009
(51) Int. Cl.: G02F 1/133, G02F 1/1345, G02F 1/1333

(54) **DISPLAY DEVICE FOR CONNECTING PLURALITY OF LCD PANELS**

(71) Applicant: Tovis Co., Ltd., Yeonsu-gu, Incheon 406-840 (KR)
(72) Inventor: PARK, Un Yong, Suwon-si Gyeonggi-do 443-733 (KR); KIM, Yong Beom, Incheon 403 - 818 (KR)
(74) Representative: von Kreisler Selting Werner
(86) International application number: PCT/KR2009/007428
(87) International publication number: WO 2011/071201

(57) **Abstract**

The invention provides a display device including a plurality of liquid crystal display (LCD) panels connected together, wherein each of the LCD panels has a standardized structure while being cut in an invisible region where there is no gate integrated circuit (IC), one of the cut LCD panels is set as a reference LCD panel, and another one of the cut LCD panels, which laterally adjoins the reference LCD panel, is 180° rotated such that a lateral cut portion of the reference LCD panel and a lateral cut portion of the adjoining LCD panel come into contact with each other, and an image branch relay board is connected to the LCD panels, to communicate with the LCD panels such that image information is branched to the reference LCD panel and the adjoining LCD panel. A plurality of LCD panels, which is provided in the form of generally-standardized products, are connected to constitute a display device having a large screen such that the display device has an extension region extended not only in a lateral direction, but also in a downward direction with respect to a reference panel. Accordingly, there is an effect of providing a display panel having a relatively large screen while overcoming a drawback encountered in a conventional tiled LCD device in which the tiled LCD device is extended only in one direction, so that it only has a rectangular shape.'

## Description

### [Technical Field]

The present invention relates to realization of a display through connection of a plurality of display panels, and more particularly to a display device including a plurality of liquid crystal display (LCD) panels connected together, in which LCD panels are connected in a region formed by cutting an outer peripheral portion of each LCD panel where gate lines and data lines of the LCD panel is not damaged, such that an inverted image transmitted to the LCD panel laterally connected to the reference LCD panel is converted into a normal image, and the LCD panel connected to the reference LCD panel beneath the LCD reference panel is arranged to have a panel structure changed from that of the reference LCD panel, thereby being capable of displaying image information through the individual LCD panels as if the image information is displayed on a single screen.

### [Background Art]

In general, display devices, which display image information, are highly important as means for transmitting visual information. The industry of such display devices is being expanded in accordance with development of information technology. A variety of information represented by the term "multimedia" increases necessity of display devices. Furthermore, development of display devices has led to large screen size, high picture quality, excellent visibility and excellent economy.

Liquid crystal display (LCD) devices, which are an example of the above-mentioned display devices, are extending the application market thereof by virtue of features of thinness, light weight and low power consumption. The demand for such LCD devices is rapidly increasing by virtue of implementation of color display. Recently, larger-size products having a high picture quality have been required in accordance with higher standard of living of consumers. Thus, development of equipment for mass production of large-screen color LCD devices has begun in earnest.

Large-screen color LCD devices have a limitation in increasing the screen size thereof due to the characteristics thereof. For this reason, a tiled LCD device, which is manufactured by bonding several panels in the form of an array have been practically developed.

Such a tiled LCD device is manufactured by bonding two or more LCD panels, as disclosed in U.S. Patent Nos. 4,980,775, 5,067,021, 5,068,740, 5,079,636, etc. In such a tiled LCD device, image interruption occurs between the adjoining LCD panels. Accordingly, it is important for image interruption occurring at LCD panel boundaries to be essentially invisible to the naked eye.

In order to solve the above-mentioned problem, Korean Patent No. 568014, which was registered after being filed with the Korean Intellectual Property Office (KIPO), discloses an "LCD panel of a tiled LCD device" in which: a common electrode extends to an end of an upper substrate in a portion of a color filter (CF substrate) corresponding to a region where there is no gate line and data line, to form a common signal input line; common signal input pads are formed at a side surface of an LCD panel, to reduce the width of a seal forming region, and thus to achieve an enhancement in definition through an increase in the number of pixels, as compared to other tiled LCD devices having the same size as the patented tiled LCD device; and an insulating material is removed from a region extending from a certain region outside the seal line to ends of gate and data lines where input pads are formed, and input pads are formed at the region, from which the insulating material has been removed, to increase the connection areas of the gate and data input pads, and thus to achieve an enhancement in picture quality.

In the above-mentioned prior art, image information is output from a display panel, which is mainly extended in one lateral direction, namely, a left or right direction. However, there is a problem in that it is impossible to realize a display panel extended in both the lateral and vertical directions.

### [Disclosure]

### [Technical Problem]

Therefore, the present invention has been made in view of the above problems, and it is an object of the present invention to realize a large-size display panel by extending a plurality of standardized liquid crystal display (LCD) panels in vertical and lateral directions in the form of an array.

It is another object of the present invention to provide a housing structure capable of firmly fixing several display panels within a single housing.

### [Technical Solution]

In accordance with an aspect of the present invention, the above and other objects can be accomplished by the provision of a display device including a plurality of liquid crystal display (LCD) panels connected together, wherein each of the LCD panels has a standardized structure while being cut in an invisible region where there is no gate integrated circuit (IC), one of the cut LCD panels is set as a reference LCD panel, and another one of the cut LCD panels, which laterally adjoins the reference LCD panel, is 180° rotated such that a lateral cut portion of the reference LCD panel and a lateral cut portion of the adjoining LCD panel come into contact with each other, and an image branch relay board is connected to the LCD panels, to communicate with the LCD panels such that image information is branched to the reference LCD panel and the adjoining LCD panel.

A plurality of fixing members to fix the plurality of LCD panels may be arranged within a backlight unit housing for the display panels along a divisional line.

### [Advantageous Effects]

In accordance with the present invention, a plurality of liquid crystal display (LCD) panels, which is provided in the form of generally-standardized products, are connected to constitute a display device having a large screen such that the display device has an extension region extended not only in a lateral direction, but also in a downward direction with respect to a reference panel. Accordingly, there is an effect of providing a display panel having a relatively large screen while overcoming a drawback encountered in a conventional tiled LCD device in which the tiled LCD device is extended only in one direction, so that it only has a rectangular shape.

Also, in accordance with the present invention, LCD panels are subjected to a cutting process to minimize a non-visible region between adjoining LCD panels, and thus to form a fine boundary between the adjoining LCD panels. Accordingly, it is possible to expect a visual effect of displaying image information as if the image information is displayed on a single screen, and to expect an effect of achieving a better picture quality, as compared to products having the same definition as the product of the present invention.

### [Description of Drawings]

The above and other objects, features and other advantages of the present invention will be more clearly understood from the following detailed description taken in conjunction with the accompanying drawings, in which:
FIG. 1 is a view illustrating a reference liquid crystal display (LCD) panel cut along a cutting region in accordance with the present invention;
FIG. 2 is a sectional view of the reference LCD panel;
FIG. 3 is a schematic view illustrating a state in which LCD panels are laterally connected in accordance with an embodiment of the present invention;
FIG. 4 is a view illustrating conversion of inverted image information into normal image information in the LCD panels connected as in FIG. 3, using an image branch relay board;
FIG. 5 is an exploded perspective view illustrating a state in which the LCD panels of FIG. 4 are separated from a housing including a backlight unit;
FIG. 6 is a plan view illustrating another embodiment of the present invention in which a large LCD panel is constituted by four panels;
FIG. 7 is a sectional view illustrating second and third adjoining ones of the LCD panels in the configuration of FIG. 6;
FIG. 8 is a view illustrating cutting regions of the second and third adjoining LCD panels of FIG. 6;

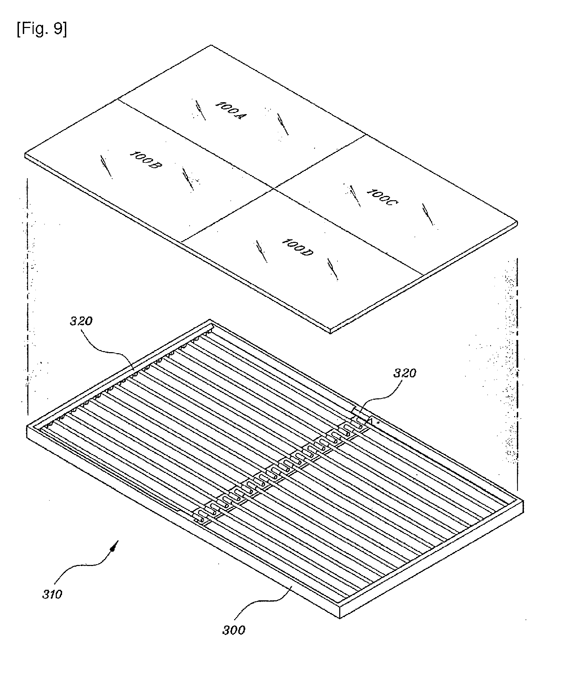

FIG. 9 is an exploded perspective view illustrating a state in which the LD panels shown in FIG. 6 are separated from a housing including a backlight unit; and
FIGS. 10 and 11 are views illustrating the case in which light emitting diodes (LEDs) are used for light sources in accordance with the present invention.

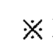 Brief Description of Reference numerals to the Drawings

| | |
|---|---|
| 100, 100A: reference LCD panel | 100': adjoining LCD panel |
| 100B: first adjoining LCD panel | 100C: second adjoining LCD panel |
| 100D: third adjoining LCD panel | 110: upper polarization plate |
| 120: color filter (CF) substrate | 130: liquid crystal layer |
| 140: thin film transistor (TFT) substrate | 150: lower polarization plate |
| 200: image branch relay board | 300, 300': housing |
| 310, 310': backlight unit | 320, 320': fixing member |

### [Best Mode]

The present invention provides a display device including a plurality of liquid crystal display (LCD) panels connected together, wherein each of the LCD panels has a standardized structure while being cut in an invisible region where there is no gate integrated circuit (IC), one of the cut LCD panels is set as a reference LCD panel, and another one of the cut LCD panels, which laterally adjoins the reference LCD panel, is 180° rotated such that a lateral cut portion of the reference LCD panel and a lateral cut portion of the adjoining LCD panel come into contact with each other, and an image branch relay board is connected to the LCD panels, to communicate with the LCD panels such that image information is branched to the reference LCD panel and the adjoining LCD panel.

### [Mode for Invention]

Hereinafter, preferred embodiments of the present invention will be described in detail with reference to the accompanying drawings.

### [FIRST EMBODIMENT]

The present invention is adapted to provide display panels for a large liquid crystal display (LCD) device, which is manufactured using conventional standardized LCD panels.

Accordingly, each of standardized LCD panels, for example, an LCD panel 100, is subjected to a cutting process in a non-visible region thereof such that gate and data lines provided at an outer peripheral edge portion of the LCD panel 100 are not damaged.

The reason why the non-visible region is cut is to solve the following problem. That is, when the non-visible regions of individual LCD panels 100 and 100' contact each other under the condition in which the LCD panels 100 and 100' adjoin each other, the boundary between one LCD panel (namely, a reference LCD panel) and the other LCD panel (namely, an adjoining LCD panel laterally adjoining the reference LCD panel) is relatively remarkable, so that, even from a distant view distance, a black boundary line is visible, thereby degrading picture quality,

It will be appreciated that the method of cutting the LCD panels 100 and 100' may be implemented by a "method for cutting a large-size TFT LCD panel" disclosed in Korean Patent Application No. 2007-14528 filed in the name of the present application with the KIPO.

That is, in an LCD panel, for example, the LCD panel 100, which is completed by sequentially coupling an upper polarization plate 110, a color filter (CF) substrate (hereinafter, referred to as a "CF substrate") 120, a liquid crystal layer 130, a thin film transistor (TFT) substrate (hereinafter, referred to as a "TFT" substrate") 140, and a lower polarization plate 150 disposed beneath the TFT substrate 140, the outer peripheral edge portions of the LCD panel 100 are cut through a series of processes of removing longitudinal portions of the upper polarization plate 110 and lower polarization plate 150 provided at the upper and lower surfaces of the LCD panel 100 from a region including a cutting region, setting the cutting region, cutting the CF substrate 120 to a medium depth of the CF substrate 120, using a diamond wheel or the like, to set a first scribe line, turning over the LCD panel 100, cutting the TFT substrate 140 to a medium depth of the TFT substrate 140, using the diamond wheel or the like, in a region precisely corresponding to the region where the first scribe line is set, to set a second scribe line, leaving the LCD panel 100 as it is, for a predetermined time, such that natural cracks are formed, cutting the naturally-cracked CF substrate 120 and TFT substrate 140, and sealing the cut portions of the CF substrate 120 and TFT substrate 140.

In some cases, it may be necessary to carry out the cutting process even for a non-visible region. In such a case, the cutting process may be carried out using the same processes as the above-described processes after peeling off the upper polarization plate 110, and setting a scribe line along a region in which gate lines 141 and data lines 142 of the TFT substrate 140 are not damaged, while observing the peeled-off surface region.

Thus, the outer peripheral surface of each of the standardized LCD panels 100 and 110' produced through a conventional production line is cut at a portion thereof, except for an integrated circuit (IC) bonding region, namely, an IC bonding region 144, to which a drive circuit unit 143 connecting the gate lines 141 and data lines 142 is connected at one outer peripheral surface of the TFT substrate 140.

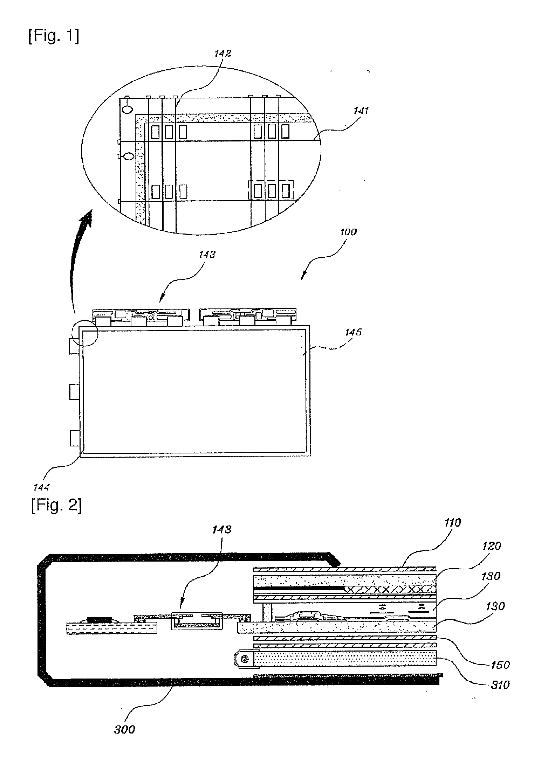

In the present invention, the portion cut as described above is referred to as a "cutting region", and is designated by reference numeral "145", as in FIG. 1.

As shown in the drawings, it can be seen that, when an LCD panel is cut, using the above-described method, the right side and lower side of the LCD panel are in a cut state.

Hereinafter, the LCD panel, which is in the cut state, as described above, will be referred to as a "reference LCD panel 100".

On the other hand, an adjoining LCD panel 100', which corresponds to the reference LCD panel 100 while laterally adjoining the reference LCD panel 100, is also prepared.

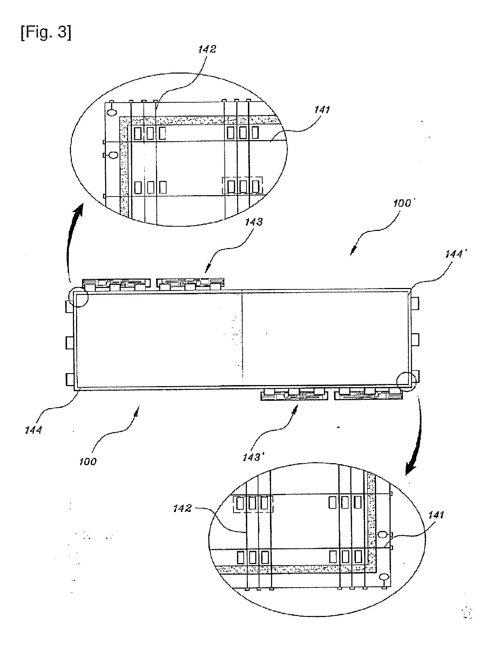

The cutting region of the adjoining LCD panel 100' is the same as that of the reference LCD panel 100. When the reference LCD panel 100 and adjoining LCD panel 100; are arranged such that the cutting surfaces thereof come into contact with each other, as shown in FIG. 3, the reference LCD panel 100 is formed, at upper and left surfaces thereof, with IC bonding regions 144 connectable to the drive circuit unit 143. It can also be seen that the IC bonding regions 144' in the adjoining LCD panel 100' adjoining the LCD panel 100 are formed at right and lower surfaces of the adjoining LCD panel 100'.

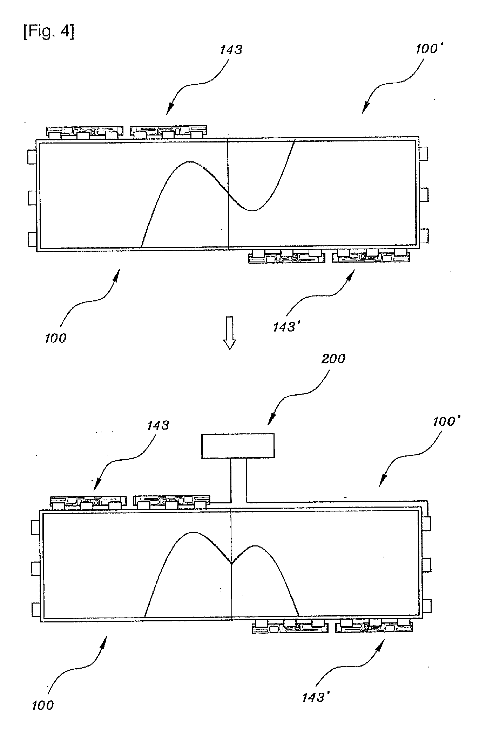

Meanwhile, when image information is transmitted through each of the drive circuit units 143 and 143' connected to respective gate lines 141 and 141' and respective data lines 142 and 142' of the reference LCD panel 100 and adjoining LCD panel 100', one image information is displayed through each of the LCD panels 100 and 100'. In this case, the image information is output in the form of image information shown in FIG. 4 because image information is displayed on the reference LCD panel 100 in the form of a normal image, whereas image information is displayed on the adjoining LCD panel 100' in the form of an inverted image.

To this end, in order to avoid such a phenomenon, an image branch relay board 200, which branches image information input through a TV or a PC, is connected to the reference LCD panel 100 and adjoining LCD panel 100' such that image information corresponding to a half of the entire image information is transmitted to the drive circuit unit 143 of the reference LCD panel 100 in the form of normal image information, and image information corresponding to the remaining half of the entire image information is transmitted to the drive circuit unit 143' of the adjoining LCD panel 100' in the form of inverted image information. In this case, accordingly, normal image information is displayed on the entire LCD panel including the reference LCD panel 100 and adjoining LCD panel 100'.

In this case, for the image branch relay board 200, an inverted board may be used.

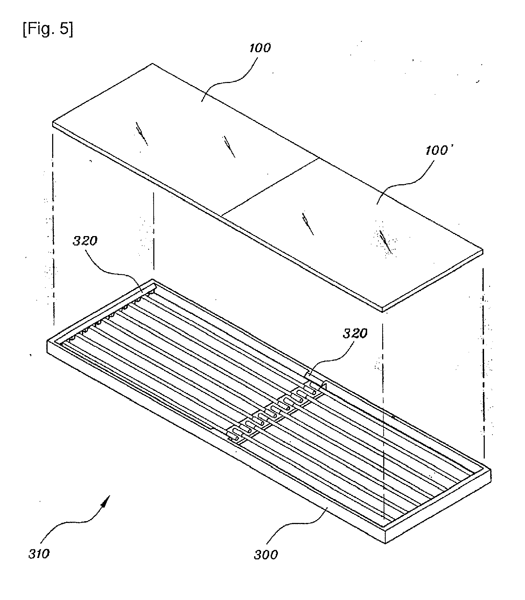

Meanwhile, the reference LCD panel 100 and adjoining LCD panel 100', which are arranged as described above, must be installed in a housing 300 provided with a backlight unit 310, to constitute a united panel. In this case, since the two LCD panels 100 and 100' are received in the housing 300, it is necessary to prevent each of the LCD panels 100 and 100' from moving during transportation or due to impact or the like. To this end, as shown in FIG. 5, the housing 300 is provided with a plurality of spaced fixing members 320 arranged along a central portion of the housing 300 where the reference LCD panel 100 and adjoining LCD panel 100' adjoin each other.

### [SECOND EMBODIMENT]

In the above first embodiment, realization of a display panel through connection of the reference LCD panel 100 and adjoining LCD panel 100' such that the adjoining LCD panel 100' extends from one side of the reference LCD panel 100 has been described. In the above embodiment, however, the shape of the realized display panel is limited to an elongated rectangular shape because only the two LCD panels 100 and 100' are connected.

To this end, in the second embodiment as described below, 4 LCD panels are used to extend the display size while realizing a large-size display panel extended to have a size proportional to the size of the reference LCD panel 100.

In order to realize such a display panel, the LCD panels should be arranged in a different manner than the first embodiment.

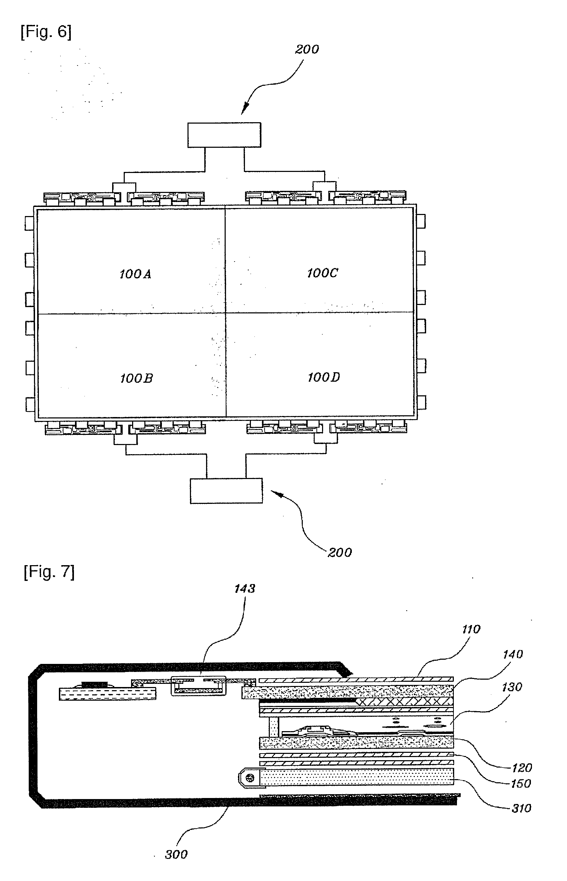

That is, as shown in FIG. 6, an LCD panel is arranged at one side (the left side in the drawing), and is selected as a reference LCD panel 100A. Thereafter, LCD panels 100B, 100C, and 100D are arranged at right and lower sides with respect to the reference LCD panel 100A.

In this embodiment, the reference numerals designated to respective LCD panels are different from those of the first embodiment, in order to distinguish the LCD panels of the second embodiment from those of the first embodiment.

For convenience and understanding of description, the LCD panel 100A is referred to as a "reference LCD panel, the LCD panel connected to a lower side of the reference LCD panel 100A is referred to as a "first adjoining LCD panel 100B", the LCD panel connected to one lateral surface (the right surface in the drawing) of the reference LCD panel 100A is referred to as a "second adjoining LCD panel 100C", and the LCD panel connected to one lateral surface (the right surface in the drawing) of the first adjoining LCD panel 100B is referred to as a "third adjoining LCD panel 100D".

First, the reference LCD panel 100A is subjected to a cutting process, as described in the first embodiment.

In this case, the reference LCD panel 100A is cut at one side thereof and a lower side thereof. Accordingly, IC bonding regions 144 are formed only at the upper and left sides of the reference LCD panel 100A when viewed in the drawing.

The first adjoining LCD panel 100B adjoining the reference LCD panel 100A directly beneath the reference LCD panel 100A is cut at an upper side thereof and one side thereof (the right side in the drawing), different than the reference LCD panel 100A. Thus, the first adjoining LCD panel 100B contacts the reference LCD panel 100A, as shown in FIG. 6.

On the other hand, the second adjoining LCD panel 100C and third adjoining LCD panel 100D have a structure different from that of the reference LCD panel 100A and first adjoining LCD panel 100B such that the IC bonding region 144, which is not cut, is prevented from coming into contact with the cut surfaces of the reference LCD panel 100A and first adjoining LCD panel 100B.

That is, the second adjoining LCD panel 100C and third adjoining LCD panel 100D have a different LCD panel structure than the reference LCD panel 100A and first adjoining LCD panel 100B, which have a general LCD panel structure, that is, an LCD panel structure of FIG. 2 including a series of constituent elements, namely, an upper polarization plate 110, a CF substrate 120, a liquid crystal layer 130, a TFT substrate 140 disposed beneath the liquid crystal layer 130, and a lower polarization plate 150 disposed beneath the TFT substrate 140.

For example, as shown in FIG. 7, the second adjoining LCD panel 100C and third adjoining LCD panel 100D has a structure including an upper polarization plate 110, a TFT substrate 140 disposed beneath the upper polarization plate 110, a liquid crystal layer 130 disposed beneath the TFT substrate 140, and a CF substrate 120 and a lower polarization plate 150 disposed, in this order, beneath the liquid crystal layer 130.

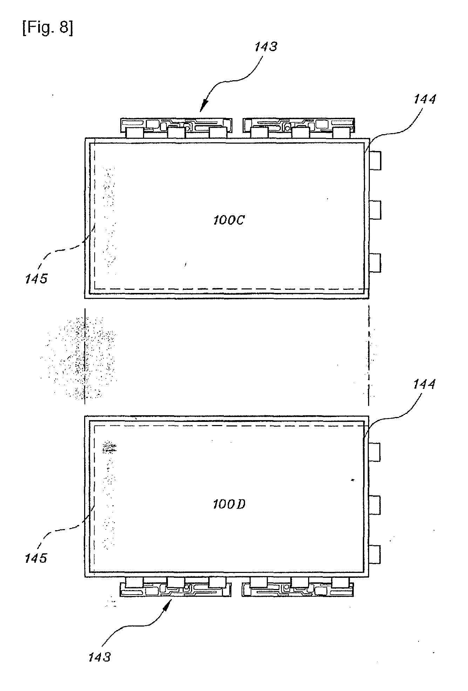

When the positions of the CF substrate 120 and TFT substrate 140 are different from those of a conventional LCD panel, cutting regions 145 other than the IC bonding regions 144 for connection of the drive circuit units 143 can be formed as shown in FIG. 8.

The LCD panels 100A, 100B, 100C and 100D are installed in a housing 300, as shown in FIG. 6. The hosing 300 is provided with fixing members 320 for fixing the boundary portions of the four LCD panels 100A, 100B, 100C and 100D, to prevent the LCD panels 100A, 100B, 100C and 100D from moving during transportation and installation.

In order to transmit image information to the LCD panels 100A, 100B, 100C and 100D in the form of normal image information and inverted image information branched from the entire image information when the image information is output to the LCD panels 100A, 100B, 100C and 100D, an image branch relay board 200 is connected to the LCD panels 100A, 100B, 100C and 100D. For example, normal image information is transmitted to the reference LCD panel 100 and second adjoining LCD panel 100C, and inverted image information is transmitted to the first adjoining LCD panel 100B and third adjoining LCD panel 100D such that image information is displayed through the LCD panels 100A, 100B, 100C and 100D as if the image information is displayed on a single LCD panel.

Also, the boundary between the adjoining ones of the LCD panels 100A, 100B, 100C and 100D is finely formed. Accordingly, when the screen is viewed at a view distance to be secured in the case of a large screen, the fine boundary as described above is be essentially invisible to the naked eye. Accordingly, it is possible to expect a visual effect that a large screen is viewed as if to be constituted by a single LCD panel.

The above embodiments have been described in conjunction with a backlight assembly in which a traditional lamp such as a cold cathode fluorescent lamp (CCFL) or an external electrode fluorescent lamp (EEFL) is mainly used as a light source of the backlight assembly. However, an LED backlight assembly using LEDs as a light source thereof may be used.

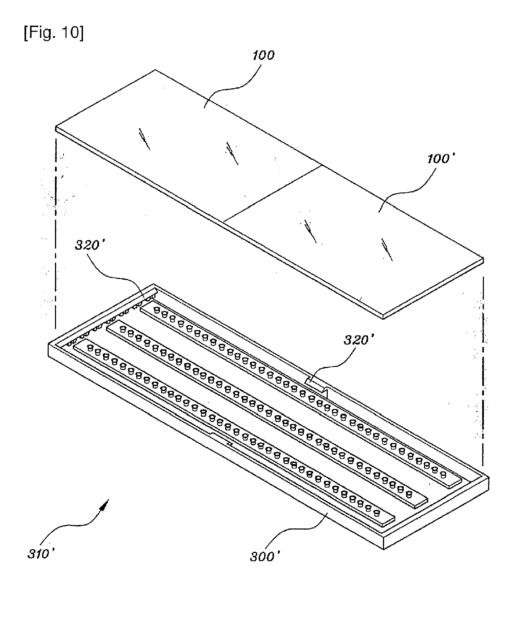

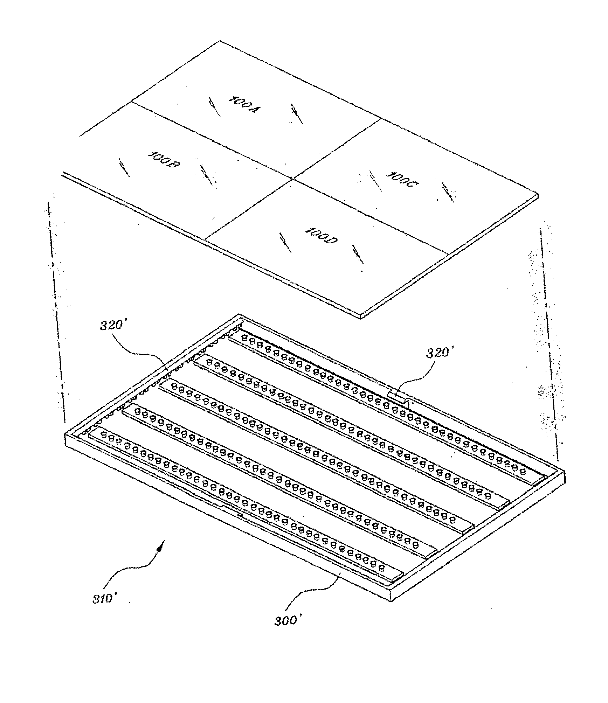

For example, as shown in FIGS. 10 and 11, fixing members 320' are installed at an inner surface of a housing 300', in which LED light sources 400 are arranged. Of course, in this case, each panel can be realized using the same configuration as the above-described configuration.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### [Industrial Applicability]

The present invention realizes a single display through connection of a plurality of LCD display panels. In accordance with the present invention, a large-size display device can be realized by connecting LCD panels at a region formed by cutting an outer peripheral portion of each LCD panel where the gate lines and data lines of the LCD panel is not damaged, such that image information is displayed through the individual LCD panels as if the image information is displayed on a single screen.

## Claims

1. A display device comprising a plurality of liquid crystal display (LCD) panels connected together, wherein:
each of the LCD panels has a standardized structure while being cut in an invisible region where there is no gate integrated circuit (IC);
one of the cut LCD panels is set as a reference LCD panel, and another one of the cut LCD panels, which laterally adjoins the reference LCD panel, is 180° rotated such that a lateral cut portion of the reference LCD panel and a lateral cut portion of the adjoining LCD panel come into contact with each other; and
an image branch relay board is connected to the LCD panels, to communicate with the LCD panels such that image information is branched to the reference LCD panel and the adjoining LCD panel.

2. A display device comprising a plurality of liquid crystal display (LCD) panels connected together, the LCD panels comprising:
a reference LCD panel (100A) cut in right and lower invisible regions thereof;
adjoining LCD panels adjoining the reference LCD panel (100A), a first adjoining LCD panel (100B) of the adjoining LCD panels adjoining the reference LCD panel (100A) directly beneath the reference LCD panel (100A), the first adjoining LCD panel (100B) being cut in an upper invisible region thereof contacting the reference LCD panel (100A) while being cut in a right invisible region thereof corresponding to the right invisible region of the reference LCD panel (100A) such that the first adjoining LCD panel (100B) contacts the reference LCD panel (100A), a second adjoining LCD panel (100C) of the adjoining LCD panels being cut in a lower invisible region thereof and a left invisible region thereof such that the second adjoining LCD panel (100C) contacts the reference LCD panel (100A), and a third adjoining LCD panel (100D) of the adjoining LCD panels being cut in an upper invisible region thereof and a left invisible region thereof such that the third adjoining LCD panel (100D) contacts the first adjoining LCD panel (100B) and the second adjoining LCD panel (100C); and
an image branch relay board connected to the LCD panels (100A to 100D), to communicate with the LCD panels (100A to 100D) such that image information is branched to the LCD panels (100A to 100D).

3. The display device according to claim 2, wherein each of the second adjoining LCD panel (100C) and the third adjoining LCD panel (100D) comprises an upper polarization plate (100), a thin film transistor (TFT) substrate (140) disposed beneath the upper polarization plate (100), a liquid crystal layer (130) disposed beneath the TFT substrate (140), and a color filter (CF) substrate (120) and a lower polarization plate (150) disposed, in this order, beneath the liquid crystal layer (130).

4. The display device according to any one of claim 1 to 3, wherein a plurality of fixing members to fix the LCD panels is arranged on an inner surface of a housing including a backlight unit or on a divisional line between light sources.

5. The display device according to claim 4, wherein each of the light sources comprises one of a cold cathode fluorescent lamp (CCFL), an external electrode fluorescent lamp (EEFL), and a light emitting diode (LED).
